# EUROPÄISCHE PATENTSCHRIFT

(11) **EP 3 055 121 B1**
(45) Veröffentlichungstag und Bekanntmachung des Hinweises auf die Patenterteilung: **31.10.2018**
(21) Anmeldenummer: 14781131.9
(22) Anmeldetag: 30.09.2014
(51) Int. Cl.: B29C 65/02, B29C 65/08, B29C 65/10, B65D 35/12

(54) **VORRICHTUNG UND VERFAHREN ZUM FLÜSSIGKEITSDICHTEN VERSIEGELN VON ZWEI SICH TEILWEISE ÜBERLAPPENDEN VERPACKUNGSTEILEN**
DEVICE AND METHOD FOR SEALING TWO PARTIALLY OVERLAPPING PACKAGING PARTS IN A FLUID-TIGHT MANNER
DISPOSITIF ET PROCÉDÉ POUR LE SCELLAGE ÉTANCHE AUX FLUIDES DE DEUX PARTIES D'EMBALLAGE SE RECOUVRANT PARTIELLEMENT

(30) Priorität: 11.10.2013 DE 102013111230
(43) Veröffentlichungstag der Anmeldung: 17.08.2016
(73) Patentinhaber: SIG Technology AG, 8212 Neuhausen am Rheinfall (CH)
(72) Erfinder: RÜEGG, Martin, CH-8248 Uhwiesen (CH)
(74) Vertreter: Cohausz & Florack
(86) Internationale Anmeldenummer: PCT/EP2014/070897
(87) Internationale Veröffentlichungsnummer: WO 2015/052040

(56) Entgegenhaltungen:
- WO-A1-99/64227
- DE-A1- 4 123 487
- DE-B3-102013 107 429

## Beschreibung

Die Erfindung betrifft zunächst eine Vorrichtung zum flüssigkeitsdichten Versiegeln von zwei sich teilweise überlappenden Verpackungsteilen, wobei das eine ein rohrförmiger Grundkörper, insbesondere gebildet aus einem Zuschnitt aus Karton/Kunststoff-Verbundmaterial, ist und ein weiteres Verpackungsteil den Verpackungskopf bzw. -boden bildet, aufweisend wenigstens einen Dorn und eine Matrize, wobei der Dorn wenigstens zwei Spreizelemente aufweist, die aus ihrer Arbeitsstellung zur Verringerung des Querschnittes in eine Ruhestellung aufeinander zu bewegt werden, um ein leichtes Aufschieben des rohrförmigen Grundkörpers zu gestatten, wobei die Spreizelemente Siegelbacken aufweisen, die in ihrer Arbeitsstellung eine geschlossene umlaufende Außenkontur bilden, die mit einer von einer Öffnung in der Matrize gebildeten Innenkontur korrespondiert, wobei zwischen Innenkontur und Außenkontur ein schmaler Ringspalt zur Beaufschlagung einer Presskraft von innen her auf den Überlappungsbereich der Verpackungsteile verbleibt, und wobei die Spreizelemente jeweils schwenkbar auf einem gemeinsamen Sockelelement angeordnet sind sowie ein entsprechendes Verfahren zum Versiegeln.

Behälter aus einem Karton/Kunststoff-Verbund für, insbesondere flüssige, Lebensmittel sind seit langer Zeit in unterschiedlichsten Formen und Formaten auf dem Markt. Der Verbundaufbau kann neben der Trägerschicht aus Karton und einer jeweils inneren und äußeren Kunststoffschicht auch noch weitere Schichten, wie beispielsweise eine Sauerstoffsperrschicht aus Aluminium enthalten. Hinsichtlich ihrer Herstellung unterscheidet man vor allem Behälter aus Einzelzuschnitten und solche Behälter, welche aus Rollenmaterial auf sog. Schlauchformungsmaschinen hergestellt werden.

Um Behälter aus Einzelzuschnitten herzustellen, wird ein - bereits gerillter und bedruckter - Zuschnitt durch Versiegelung zweier gegenüberliegender Kanten mittels einer sog. Längsnaht zu einem sog. Verpackungsmantel, einem rohrförmigen Grundkörper, welcher dann beim Abfüller zunächst zu einem einseitig offenen Behälter verschlossen, geformt und danach sterilisiert, gefüllt und der schließlich durch Verschließen der anderen Seite zu einer fertigen Packung wird.

Die meisten auf dem Markt befindlichen Packungen werden an ihren Enden durch Faltung und Siegelung des rohrförmigen Grundkörpers selbst hergestellt. Für besondere Packungsformen kann ein Ende auch von einem vorgefertigten Formkörper als weiteres Verpackungsteil gebildet werden, der wiederum einzeln aus Kunststoff oder auch aus Fasermaterial (Pulpe) vorgefertigt sein kann. Hierdurch lassen sich beliebige geometrische Ausbildungen, insbesondere hinsichtlich der Größe und Anordnung von angeformten Öffnungs- bzw. Ausgießelementen realisieren.

Ein solcher Behälter ist aus der deutschen Patentanmeldung DE 10 2010 014 993 A1 bekannt. Hier ist der das Oberteil des Behälters bildende Formkörper so groß ausgebildet, dass sein Umfang im wesentlichem dem des rohrförmigen Grundkörpers entspricht. Dies ist jedoch nicht zwingend so, es sind auch solche Behälter bekannt, bei denen sich der Querschnitt des rohrförmigen Grundkörpers zunächst verengt, um dann an seinem verjüngten Ende mit einem Oberteil verbunden werden zu können (DE 10 2010 050 502 A1 oder DE 39 42 319 A1).

Des weiteren ist eine Versiegelungsvorrichtung auch in der älteren deutschen Patentanmeldung 10 2013 107 429.4 der gleichen Anmelderin beschrieben, auf deren Offenbarungsgehalt hinsichtlich des grundsätzlichen Aufbaus des Dornes für diese Anmeldung Bezug genommen wird. Dieser Dorn weist keine Blattfederelemente zur schwenkbaren Befestigung der Spreizelemente auf.

Eine gattungsgemäße Vorrichtung mit den Merkmalen des Oberbegriffs von Anspruch 1 ist aus der DE 4 123 487 A1 gekannt. Dort sind die Spreizelemente jedoch nicht schwenkbar ausgeführt.

Eine Vorrichtung mit den Merkmalen des Oberbegriffs von Anspruch 1 ist ebenfalls aus der WO 99/64227 A1 gekannt. Dort weist der Dorn keine Blattfederelemente zur schwenkbaren Befestigung der Spreizelemente auf.

Davon ausgehend liegt der Erfindung die Aufgabe zugrunde, die eingangs genannte und zuvor näher beschriebene Vorrichtung nach dem Oberbegriff von Anspruch 1 und ein entsprechendes Verfahren zum Versiegeln so auszugestalten und weiterzubilden, dass die Kinematik und Synchronisierung der Spreizelmente optimiert wird. Darüber hinaus ist eine einfache, verschleißarme, aber auch zuverlässige und gut zu reinigende Konstruktion erwünscht, mit der sich auch aseptisch gefüllte Packungen herstellen lassen. Trotz hoher Taktgeschwindigkeiten beim Betreiben der damit ausgerüsteten Verpackungsmaschinen soll bei der Herstellung eine gleichmäßige Verpresskraft über den gesamten Umfang der Fügeteile bereitgestellt werden.

Gelöst wird diese Aufgabe bei einer Vorrichtung gemäß dem Oberbegriff von Anspruch 1 dadurch, dass die Spreizelemente jeweils schwenkbar auf einem gemeinsamen Sockelelement angeordnet sind und dass jedes Spreizelement an wenigstens einem verwindungssteifen Blattfederelement befestigt ist, welches ein exaktes Verschwenken des jeweiligen Spreizelements zwischen Ruhe- und Arbeitsstellung ermöglicht. Auf diese Weise lassen sich bei beispielsweise annähernd quadratischem Querschnitt exakte Richtungsvektoren bestimmen, welche 45° in die "Ecken" weisen und somit auch dort eine feste Versiegelung ermöglichen. Durch die exakte Richtungsführung lässt sich auch der Verschleiß der aneinander vorbei gleitenden Flächen minimieren.

Erfindungsgemäß wird durch die Blattfederelemente die Kinematik der Spreizelemente deutlicht verbessert. Weiterhin kann der Verschleiß der Siegelelemente und auch der Führungselemente (elastische Verformung im Materialinnern) deutlich reduziert werden. Da die Blattfederelemente flächige Einzelteile mit glatten Oberflächen sind, wird die Reinigbarkeit des Dornes deutlich verbessert. Insbesondere wird durch die exakte Führung der Spreizelemente eine gleichmäßige Verpresskraft über den gesamten Umfang der Fügeteile beaufschlagt und damit eine optimale Dichtheit der so hergestellten Packungen erreicht. Hinsichtlich des Verfahrens gemäß dem Oberbegriff von Anspruch 15 besteht die Lösung der Aufgabe in der Durchführung der folgenden Schritte:
- Zuführen eines aufgefalteten rohrförmigen Grundkörpers,
- Aufschieben des Grundkörpers auf einen Spreizelemente aufweisenden Dorn,
- Zuführen einer eine Öffnung aufweisenden Matrize,
- Zuführen eines weiteren Verpackungsteils auf den Dorn,
- Eintrag der Fügewärme,
- Verpressen von Grundkörper und weiterem Verpackungsteil gegen die Matrize durch Auffalten der Spreizelemente zur Bildung einer umlaufenden Außenkontur im Kontaktbereich der Siegelbacken,
- Fügen von Grundkörper und weiterem Verpackungsteil,
- Einfalten der Spreizelemente,
- Entfernen der Matrize und
- Abziehen der Einheit aus Grundkörper und weiterem Verpackungsteil.

Nach einer weiteren Lehre der Erfindung sind die Blattfederelemente im Wesentlichen vertikal angeordnet, verlaufen also parallel zur Längserstreckung der Spreizelemente. Weitere Blattfederelemente können auch horizontal angeordnet sein. Bevorzugt sind diese weiteren Blattfederelemente jeweils zwischen zwei gegenüberliegenden Spreizelementen angeordnet. Diese Anordnung verhindert zuverlässig ein Ausweichen, Verdrehen oder Verkippen und somit jegliche Torsion der Spreizelemente.

Bevorzugt sind die vertikal angeordneten die Blattfederelemente im unteren Teil der Spreizelemente und die Blattfederelemente ihrerseits beispielsweise an einem auf einem Dornrad angeordneten Sockel befestigt. Bei der erfindungsgemäßen Vorrichtung sind bevorzugt mehrere die faltbaren Dorne aufweisenden Sockelelemente auf einem Dornrad befestigt. Sie sind dabei zunächst über den Umfang des Dornrades verteilt angeordnet und es können darüber hinaus bei entsprechend breiten Dornrädern auch mehrere parallel verlaufende Reihen von umlaufend angeordneten Dornen nebeneinander vorgesehen sein. Auf diese Weise lassen sich mit einer relativ geringen Baugröße große Durchsätze bei der Herstellung bzw. Befüllung von Packungen erzielen.

Da in der bevorzugten zuvor genannten Ausführung die Spreizelemente nur in ihrem unteren Bereich miteinander verbunden sind, ist es besonderes zweckmäßig, wenn nach einer weiteren Lehre der Erfindung zusätzliche Blattfederelemente im oberen Teil der Spreizelemente befestigt und mit ihren unteren freien Enden an einem gemeinsamen Zentrierelement befestigt sind. Dieses Zentrierelement dient in erster Linie der Synchronisierung der Bewegungsabläufe beim Auf- und Einfalten der Spreizelemente. Es wird bevorzugt nur durch die zusätzlichen Blattfederelemente gehalten und ist nicht auf andere Weise gehalten oder geführt, so dass sich beim Auf- bzw. Einfalten der Spreizelemente das Zentrierelement frei in vertikaler Richtung bewegen kann.

Eine alternative Ausführungsform sieht vor, dass die Blattfederelemente sich über die gesamte Länge der Spreizelemente bis zu den die Siegelbacken hin erstrecken.

Eine zweckmäßige Weiterbildung der Erfindung sieht vor, dass die Spreizelemente wenigstens im Bereich ihrer Siegelbacken als Magnetanker ausgeführt sind. Wenn dann zusätzlich die Matrize um ihre Öffnung eine oder mehrere Magnetspule/n aufweist, lässt sich eine besonders elegante und klein bauende Antriebslösung realisieren. Bevorzugt entspricht die axiale Höhe der Magnetanker der Höhe der Magnetspule/n. Die magnetischen Kräfte auf die Spreizelemente können durch eine geschickte Wahl der Eigenmassen der Magnetanker sowie deren geometrische Ausbildung und Lage variiert werden.

Eine andere Ausgestaltung der Erfindung sieht vor, dass die Matrize über den Umfang ihrer Öffnung einstückig ausgebildet ist. Auf diese Weise kann die Öffnung in der Matrize den Dorn aufnehmen und es sind keine weiteren Antriebe oder Abstützelemente notwendig, um die Reaktionskräfte beim eigentlichen Versiegeln aufnehmen zu können.

Nach einer weiteren Lehre der Erfindung kann die Matrize auch Elemente zum Eintrag der Fügewärme aufweisen. Im Falle des Fügens mittels Ultraschallschweißen können diese Elemente zum Fügen wenigstens eine Ultraschallsonotrode innerhalb der Matrize umfassen, wobei die Siegelbacken dabei als Amboss dienen. Alternativ ist es auch möglich, dass als Elemente zum Eintrag der Fügewärme Heißluftöffnungen innerhalb der Matrize und/oder innerhalb der Siegelbacken vorgesehen sind, falls der Eintrag der Fügewärme mittels Heißluftbeaufschlagung erfolgen soll.

In einer weiteren Ausgestaltung der Erfindung erfolgt das Zuführen des weiteren Verpackungsteils gleichzeitig mit dem Zuführen der Matrize, indem die Öffnung der Matrize zum Festhalten des weiteren Verpackungsteils ausgebildet ist. In diesem Fall kann dann zweckmäßiger Weise auch das Entfernen der Matrize und das Abziehen der Einheit aus Grundkörper und weiterem Verpackungsteil gleichzeitig erfolgen, wodurch sich die Anzahl der notwendigen Bearbeitungsschritte deutlich reduzieren lässt.

Erfindungsgemäß erfolgt das Auffalten bzw. Einfalten der Spreizelemente in genau festgelegte Richtungen. Auf diese Weise lässt sich ein optimales Aufbringen einer ausreichenden Presskraft beim Fügevorgang, insbesondere in den "Eckbereichen" realisieren.

Das Fügen selbst kann nach einer weiteren Lehre der Erfindung dann mittels Ultraschall oder dann mittels Heißluft in Verbindung mit dem bereits beschriebenen Pressvorgang erfolgen.

Beim erfindungsgemäßen Verfahren kann dabei entweder das Auffalten der Spreizelemente magnetisch und das Einfalten mit Federkraft erfolgen, oder aber, alternativ, kann auch das Auffalten der Spreizelemente mit Federkraft und das Einfalten magnetisch erfolgen. Eine dritte Möglichkeit besteht nach einer weiteren Ausgestaltung der Erfindung darin, dass die Umkehr der Faltbewegung durch magnetisches Umpolen erfolgt. Die Festlegung der jeweiligen Antriebssituation ist von verschiedenen Faktoren wie beispielsweise der Kraftverteilung, Energieausnutzung, Baugröße, insbesondere bei kleineren Packungsformaten, etc. abhängig.

Die Erfindung wird nachfolgend anhand einer lediglich ein bevorzugtes Ausführungsbeispiel darstellenden Zeichnung näher erläutert. In der Zeichnung zeigen
- Fig. 1: eine perspektivische Ansicht eines Dorns in einer diagonal geschnittenen Matrize einer erfindungsgemäßen Vorrichtung mit Spreizelementen in Ruhestellung,
- Fig. 2: eine perspektivische Ansicht des Dorns in der Matrize aus Fig. 1 mit Spreizelementen in Arbeitsstellung,
- Fig. 3: eine Draufsicht auf den Dorn in der Matrize aus in Fig. 1,
- Fig. 4: den Gegenstand aus Fig. 2, unter Weglassung des vorderen Spreizelements,
- Fig. 5: einen Vertikalschnitt entlang der Linie V-V aus Fig. 3 und
- Fig. 6: einen erfindungsgemäß versiegelten Behälter im Vertikalschnitt.

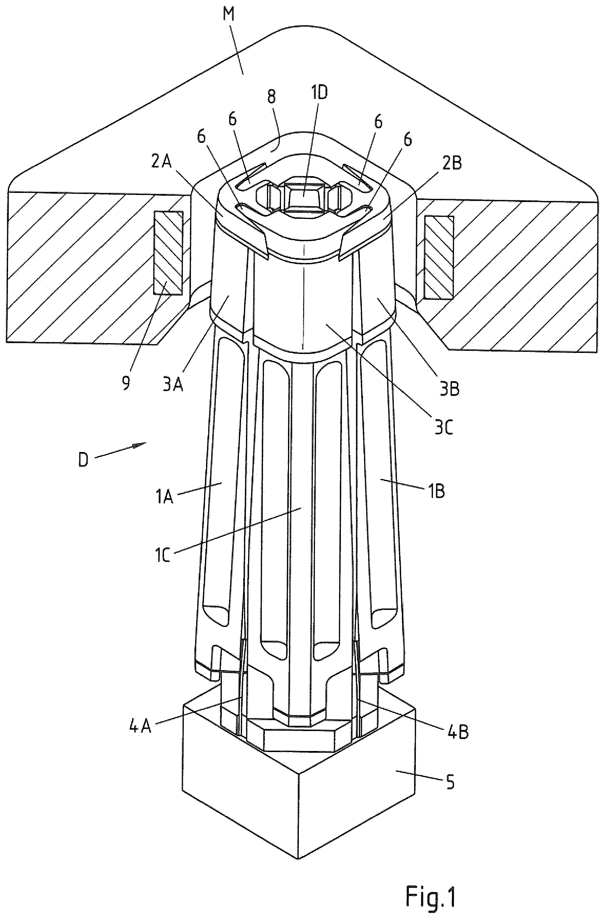

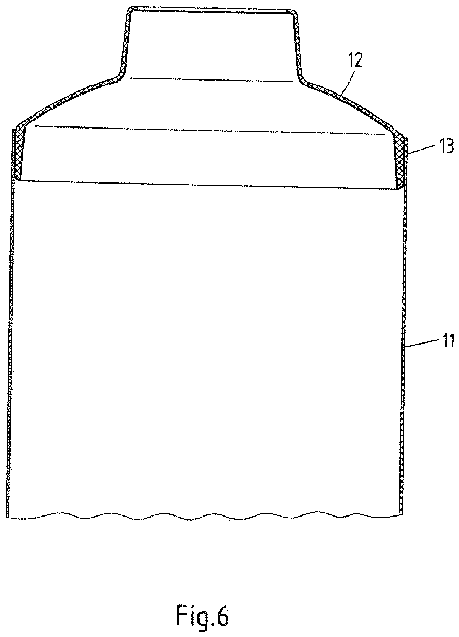

Fig. 1 zeigt zunächst und im Wesentlichen einen Dorn D einer erfindungsgemäßen Vorrichtung zum flüssigkeitsdichten Versiegeln eines rohrförmigen Grundkörpers 11 mit einem weiteren Verpackungsteil 12 (in Fig. 6 als Packungskopf dargestellt). Der Dorn D weist im dargestellten und insofern bevorzugten Ausführungsbeispiel vier Spreizelemente 1A, 1B, 1C und 1D auf, welche an ihrem unteren Ende schwenkbar an einem Sockelelement 5 verbunden sind. Das Sockelelement 5 ist dabei - in der Regel mit weiteren, umlaufend angeordneten weiteren Sockelelementen - fest auf einem (nicht dargestellten) Dornrad angeordnet.

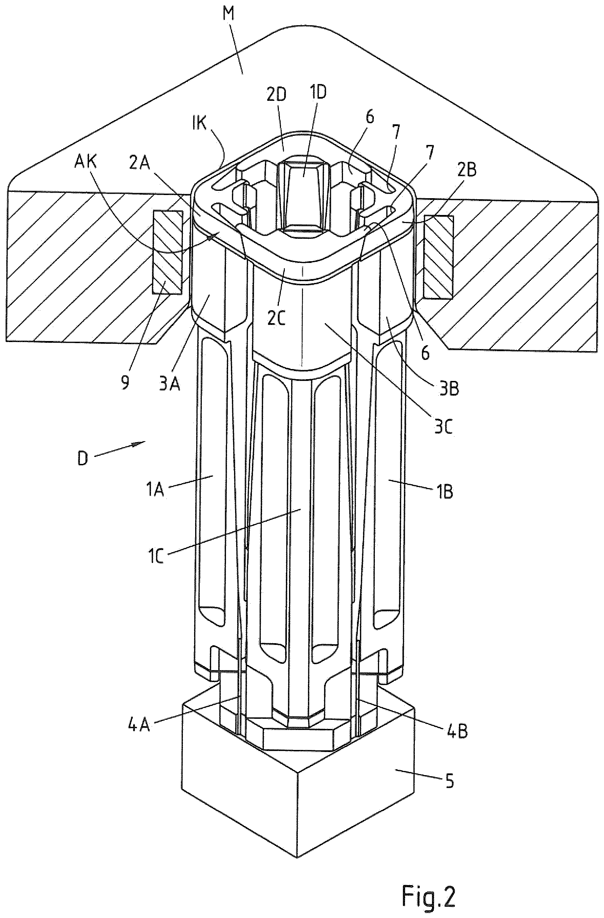

Die Verbindung der vier Spreizelemente 1A, 1B, 1C und 1D zum Sockelelement erfolgt dabei zunächst bevorzugt über jeweils ein vertikal angeordnetes verwindungsfreies Blattfederelement 4A, 4B, 4C, 4D, welches ein exaktes Verschwenken des jeweiligen Spreizelements 1A, 1B, 1C, 1D zwischen Ruhe- und Arbeitsstellung ermöglicht. Diese bewegen sich dabei exakt in Richtung der "Ecken" der Öffnung 8 einer um den Dorn D angeordneten Matrize M, um aus ihrer Ruhestellung in ihre Arbeitsstellung zu gelangen, wie sie in Fig. 2 dargestellt ist. Dort erkennt man deutlich, dass die ausgefalteten Spreizelemente 1A, 1B, 1C und 1D eine geschlossene, umlaufende Außenkontur AK bilden, welche in etwa der Innenkontur IK der Öffnung 8 in der Matrize M entspricht, so dass nur ein schmaler Ringspalt verbleibt. Die Matrize M ist bevorzugt an der Unterseite ihrer Öffnung 8 mit einer nicht näher bezeichneten Fase versehen, um einen sich nach oben verjüngenden Einführabschnitt zu bilden. Die freien Enden der vier Spreizelemente 1A, 1B, 1C und 1D sind als Siegelbacken 2A, 2B, 2C und 2D ausgebildet. Unterhalb der Siegelbacken 2A, 2B, 2C und 2D sind Magnetanker 3A, 3B, 3C, 3D ausgebildet.

Die Magnetanker 3A, 3B, 3C, 3D können zum Aufspreizen des Dorns D mittels einer Magnetspule 9, die bevorzugt im Inneren der Matrize M oder nahe an ihr angebracht ist, angeregt werden. Die Bauhöhe der Magnetanker 3A, 3B, 3C und 3D entspricht dabei etwa der Höhe der in der Matrize M angeordneten Magnetspule 9. Dies reduziert nicht nur die Baugröße der Spreizelemente 1A, 1B, 1C und 1D erheblich, sondern minimiert auch den Verschleiß und den Wartungsaufwand, da auf mechanische Antriebselemente vollständig verzichtet werden kann.

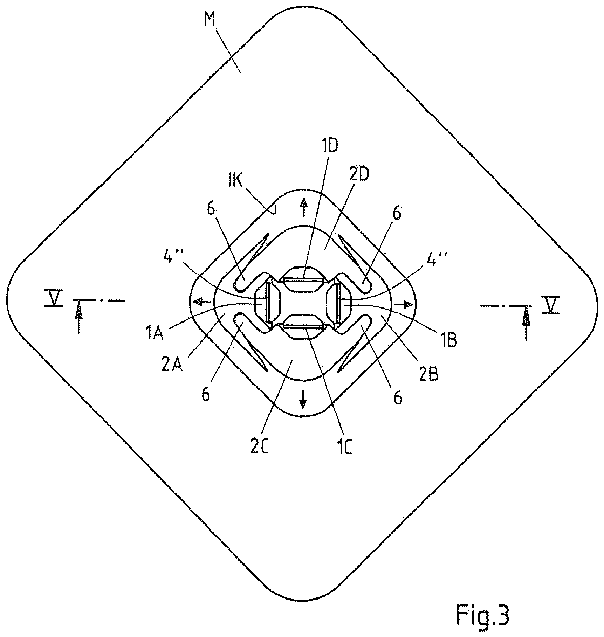

Das genaue Zusammenwirken der vier Spreizelemente 1A, 1B, 1C und 1D lässt sich am besten anhand Fig. 3 erläutern. Dort ist in einer Draufsicht auf die Darstellung nach Fig. 1 deutlich zu erkennen, dass die beiden äußeren Spreizelemente 1A und 1B sich in Richtung der Pfeile von der dargestellten Ruhestellung in eine Arbeitsstellung verschwenken lassen, wie sie in Fig. 2 gezeigt ist. Gleiches gilt für die beiden inneren Spreizelemente 1C und 1D. Die Bewegungsrichtung ist dabei maßgeblich durch die vertikalen Blattfederelemente 4A, 4B, 4C und 4D vorgegeben, welche eine sehr genaue lineare Beweglichkeit in Richtung der Pfeile bewirken und ein Ausweichen, Verdrehen oder Verkippen und somit jegliche Torsion der Spreizelemente verhindern.

Um eine Auffalt- bzw. Einfaltbewegung zu ermöglichen, weisen die beiden inneren Siegelbacken 2C und 2D jeweils zwei Zungen 6 auf, die in entsprechende Nuten 7 (vgl. Fig. 2) der beiden äußeren Siegelbacken 2A und 2B aufgenommen werden können. Dabei bewegen sich die Oberflächen der jeweils benachbarten Siegelbacken reibungsfrei aneinander vorbei. Auf diese Weise kann der benötigte Energieaufwand beim Aufspreizen des Dorns D minimiert werden. Durch die schrägen Flanken der Oberflächen entsteht ferner, wie Fig. 2 deutlich zu entnehmen, die bereits erwähnte geschlossene umlaufende Außenkontur AK des Siegelbereiches der Siegelbacken 2A, 2B, 2C, 2D.

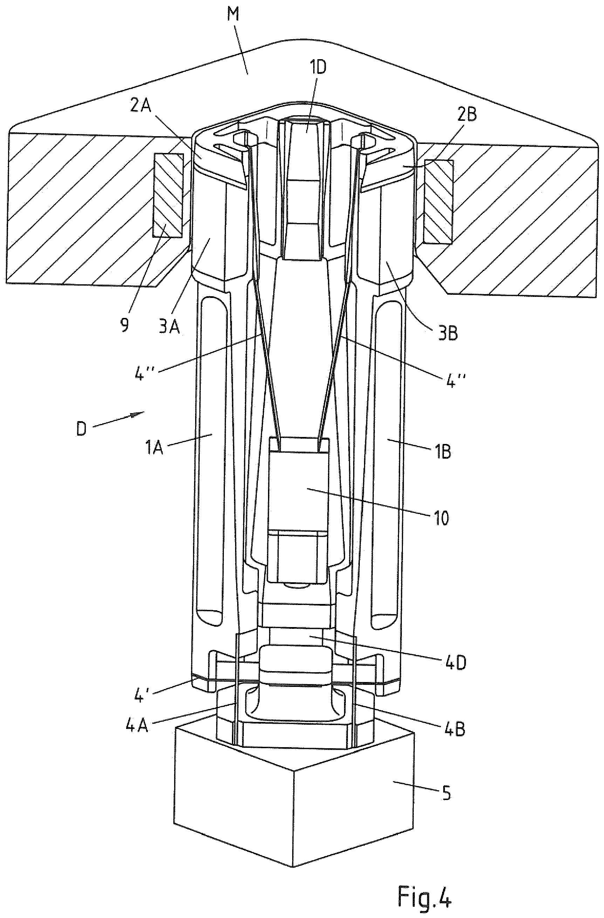

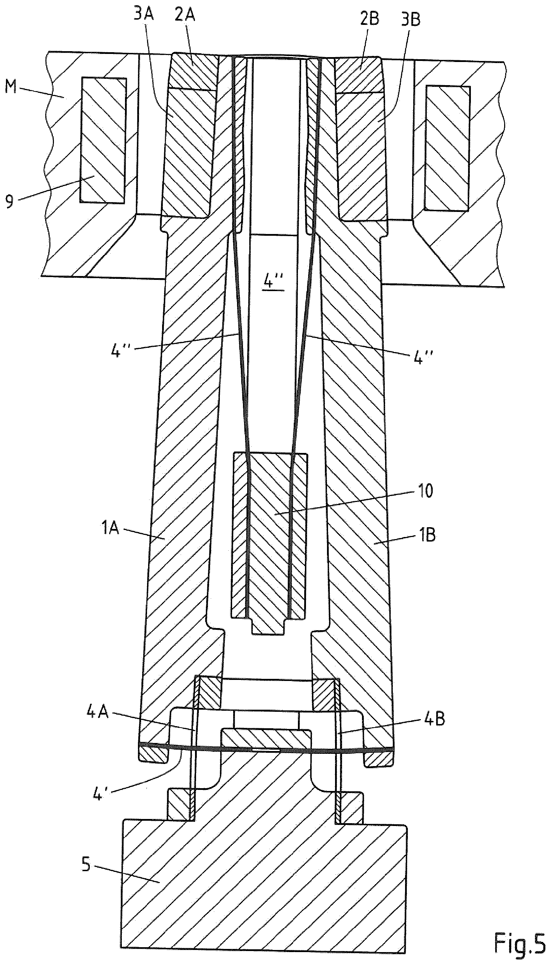

Der genaue Aufbau der erfindungsgemäßen Vorrichtung ist besonders deutlich aus den Fig. 4 und 5 zu entnehmen, wobei die Fig. 4 der Darstellung aus Fig. 2 entspricht, wobei jedoch zur besseren Übersicht auf die Darstellung des vorderen Spreizelements verzichtet worden ist.

Man erkennt deutlich, dass zur weiteren Erhöhung der Führungsgenauigkeit im unteren Bereich der Spreizelemente weitere Blattfederelemente 4' horizontal zwischen zwei jeweils gegenüberliegenden Spreizelementen angeordnet sind, wobei in dieser Darstellung nur das Blattfederelement 4' zwischen den beiden Spreizelementen 1A und 1B erkennbar ist.

In der dargestellten und insoweit bevorzugten Ausführungsform wird eine noch weitere Erhöhung der Führungsgenauigkeit dadurch erreicht, dass die Spreizelemente in ihrem oberen Bereich zusätzliche Blattfederelemente 4" aufweisen, welche an ihrem oberen Ende an den Spreizelementen 1A, 1B, 1C und 1D und mit ihren unteren freien Enden an einem im Inneren der Spreizelemente angeordneten Zentrierelement 10 befestigt sind. Im dargestellten Ausführungsbeispiel wird das Zentrierelement 10 nur durch die zusätzlichen Blattfederelemente 4" gehalten. Da auch diese zusätzlichen Blattfederelemente 4" in Fig. 4 nicht alle zu erkennen sind, ist insofern in Fig. 5 noch ein Vertikalschnitt entlang der Linie V-V in Fig. 3 dargestellt, aus der hervorgeht, dass sich die zusätzlichen Blattfederelemente 4" von den oberen Teilen aller Spreizelemente 1A, 1B und 1D (im Schnitt nicht erkennbar) erstrecken und mit ihren unteren Enden im Zentrierelement 10 gehalten sind, welches beim Auf- oder Einfalten der Spreizelemente 1A, 1B, 1C, 1D für eine exakte Führungsrichtung der Spreizelemente und deren Synchronisierung sorgt und sich dabei leicht in seiner Lage in der vertikalen Richtung verändern kann.

Fig. 6 zeigt schließlich einen erfindungsgemäß hergestellten Behälter im Vertikalschnitt, bei dem ein rohrförmiger Grundkörper 11 einen weiteren Verpackungsteil 12 in einem Überlappungsbereich 13 umschließt. Man erkennt deutlich, dass zum Fügen beider Verpackungsteile 11, 12 von innen her eine Presskraft im Bereich der überlappenden Verpackungsteile aufgebracht werden muss, welches durch die erfindungsgemäße Vorrichtung zuverlässig und elegant realisiert werden kann.

Mit der dargestellten Anordnung lässt sich beispielsweise eine Packung herstellen, wie sie aus der weiter oben näher beschriebenen DE 10 2010 014 993 A1 bekannt ist. Deren Querschnitt ist annähernd quadratisch, wobei die "Ecken" entsprechend große Radien aufweisen. Es wird ausdrücklich darauf hingewiesen, dass das gezeigte Ausführungsbeispiel nur zur Erläuterung des beanspruchten Erfindungsgedankens dienen und keinesfalls darauf beschränkt sein soll. Je nach gewünschtem Querschnitt und/oder Format der herzustellenden Packungen sind eine Vielzahl von Variationen denkbar, ohne den Rahmen der Erfindung zu verlassen.

## Patentansprüche

1. Vorrichtung zum flüssigkeitsdichten Versiegeln von zwei sich teilweise überlappenden Verpackungsteilen (11, 12), wobei das eine ein rohrförmiger Grundkörper (11), insbesondere gebildet aus einem Zuschnitt aus Karton/Kunststoff-Verbundmaterial, ist und ein weiteres Verpackungsteil (12) den Verpackungskopf bzw. -boden bildet, aufweisend wenigstens einen Dorn (D) und eine Matrize (M), wobei der Dorn (D) wenigstens zwei Spreizelemente (1A, 1B, 1C, 1D) aufweist, die aus ihrer Arbeitsstellung zur Verringerung des Querschnittes in eine Ruhestellung aufeinander zu bewegt werden, um ein leichtes Aufschieben des rohrförmigen Grundkörpers (11) zu gestatten, wobei die Spreizelemente (1A, 1B, 1C, 1D) Siegelbacken (2A, 2B, 2C, 2D) aufweisen, die in ihrer Arbeitsstellung eine geschlossene umlaufende Außenkontur (AK) bilden, die mit einer von einer Öffnung (8) in der Matrize (M) gebildeten Innenkontur (IK) korrespondiert, wobei zwischen Innenkontur (IK) und Außenkontur (AK) ein schmaler Ringspalt zur Beaufschlagung einer Presskraft von innen her auf den Überlappungsbereich (13) der Verpackungsteile (11,12) verbleibt,
**dadurch gekennzeichnet, dass**
die Spreizelemente (1A, 1B, 1C, 1D) jeweils schwenkbar auf einem gemeinsamen Sockelelement (5) angeordnet sind
und dass
jedes Spreizelement (1A, 1B, 1C, 1D) an wenigstens einem verwindungssteifen Blattfederelement (4A, 4B, 4C, 4D) befestigt ist, welches ein exaktes Verschwenken des jeweiligen Spreizelements (1A, 1B, 1C, 1D) zwischen Ruhe- und Arbeitsstellung ermöglicht.

2. Vorrichtung nach Anspruch 1,
**dadurch gekennzeichnet, dass**
die Blattfederelemente (4A, 4B, 4C, 4D) im Wesentlichen vertikal angeordnet sind.

3. Vorrichtung nach Anspruch 1 oder 2,
**dadurch gekennzeichnet, dass**
weitere Blattfederelemente (4') horizontal angeordnet sind.

4. Vorrichtung nach Anspruch 3,
**dadurch gekennzeichnet, dass**
jeweils ein weiteres Blattfederelement (4') zwischen zwei jeweils gegenüberliegenden Spreizelementen (1A, 1B bzw. 1C, 1D) angeordnet ist.

5. Vorrichtung nach einem der Ansprüche 1 bis 4,
**dadurch gekennzeichnet, dass**
die Blattfederelemente (4A, 4B, 4C, 4D) im unteren Teil der Spreizelemente (1A, 1B, 1C, 1D) befestigt sind.

6. Vorrichtung nach einem der Ansprüche 1 bis 5,
**dadurch gekennzeichnet, dass**
zusätzliche Blattfederelemente (4") im oberen Teil der Spreizelemente (1A, 1B, 1C, 1D) befestigt sind und mit ihren unteren freien Enden an einem Zentrierelement (10) befestigt sind.

7. Vorrichtung nach Anspruch 6,
**dadurch gekennzeichnet, dass**
das Zentrierelement (10) nur durch die zusätzlichen Blattfederelemente (4") gehalten wird.

8. Vorrichtung nach einem der Ansprüche 1 bis 7,
**dadurch gekennzeichnet, dass**
die Blattfederelemente sich über die gesamte Länge der Spreizelemente bis zu den Siegelbacken hin erstrecken.

9. Vorrichtung nach einem der Ansprüche 1 bis 8,
**dadurch gekennzeichnet, dass**
die Spreizelemente (1A, 1B, 1C, 1D) wenigstens im Bereich ihrer Siegelbacken (2A, 2B, 2C, 2D) als Magnetanker (3A, 3B, 3C, 3D) ausgeführt sind.

10. Vorrichtung nach einem der Ansprüche 1 bis 9,
**dadurch gekennzeichnet, dass**
die Matrize (M) über ihren Umfang der Öffnung (8) einstückig ausgebildet ist.

11. Vorrichtung nach einem der Ansprüche 1 bis 10,
**dadurch gekennzeichnet, dass**
die Matrize (M) eine oder mehrere Magnetspule/n (9) aufweist.

12. Vorrichtung nach einem der Ansprüche 1 bis 11,
**dadurch gekennzeichnet, dass**
die Matrize Elemente zum Eintrag der Fügewärme aufweist.

13. Vorrichtung nach Anspruch 12,
**dadurch gekennzeichnet, dass**
als Elemente zum Eintrag der Fügewärme wenigstens eine Ultraschallsonotrode im Bereich der Matrize vorgesehen ist und dass die Siegelbacken dabei als Amboss dienen.

14. Vorrichtung nach Anspruch 12,
**dadurch gekennzeichnet, dass**
als Elemente zum Eintrag der Fügewärme Heißluftöffnungen innerhalb der Matrize und/oder innerhalb der Siegelbacken vorgesehen sind.

15. Verfahren zum flüssigkeitsdichten Versiegeln von zwei sich teilweise überlappenden Verpackungsteilen (11, 12), wobei das eine ein rohrförmiger Grundkörper (11), insbesondere gebildet aus einem Zuschnitt aus Karton/Kunststoff-Verbundmaterial, ist und ein weiteres Verpackungsteil (12) den Verpackungskopf bzw. -boden bildet, mittels einer Vorrichtung nach einem der Ansprüche 1 bis 14,
**gekennzeichnet durch** die folgenden Schritte:
- Zuführen eines aufgefalteten rohrförmigen Grundkörpers,
- Aufschieben des Grundkörpers auf einen Spreizelemente aufweisenden Dorn,
- Zuführen einer eine Öffnung aufweisenden Matrize,
- Zuführen eines weiteren Verpackungsteils auf den Dorn,
- Eintrag der Fügewärme,
- Verpressen von Grundkörper und weiterem Verpackungsteil gegen die Matrize durch Auffalten der Spreizelemente zur Bildung einer umlaufenden Außenkontur im Kontaktbereich der Siegelbacken,
- Fügen von Grundkörper und weiterem Verpackungsteil,
- Einfalten der Spreizelemente,
- Entfernen der Matrize und
- Abziehen der Einheit aus Grundkörper und weiterem Verpackungsteil.

16. Verfahren nach Anspruch 15,
**dadurch gekennzeichnet, dass**
das Zuführen des weiteren Verpackungsteils gleichzeitig mit dem Zuführen der Matrize erfolgt, indem die Öffnung der Matrize zum Festhalten des weiteren Verpackungsteils ausgebildet ist.

17. Verfahren nach Anspruch 15 oder 16,
**dadurch gekennzeichnet, dass**
das Auffalten bzw. Einfalten der Spreizelemente in genau festgelegte Richtungen erfolgt.

18. Verfahren nach einem der Ansprüche 15 bis 17,
**dadurch gekennzeichnet, dass**
der Eintrag der Fügewärme mittels Ultraschall erfolgt.

19. Verfahren nach einem der Ansprüche 15 bis 17,
**dadurch gekennzeichnet, dass**
der Eintrag der Fügewärme mittels Heißluft erfolgt.

20. Verfahren nach einem der Ansprüche 15 bis 19,
**dadurch gekennzeichnet, dass**
das Auffalten der Spreizelemente magnetisch und das Einfalten mit Federkraft erfolgt.

21. Verfahren nach einem der Ansprüche 15 bis 19,
**dadurch gekennzeichnet, dass**
das Auffalten der Spreizelemente mit Federkraft und das Einfalten magnetisch erfolgt.

22. Verfahren nach einem der Anspruch 15 bis 19,
**dadurch gekennzeichnet, dass**
die Umkehr der Faltbewegung durch magnetisches Umpolen erfolgt.

## Claims

1. Device for the fluid-tight sealing of two partially overlapping packaging components (11, 12), one being a tubular base member (11), in particular formed from a blank of composite cardboard/plastics material, and an additional packaging component (12) forming the upper packaging portion or packaging base, having at least one mandrel (D) and one die (M), the mandrel (D) having at least two expansion elements (1A, 1B, 1C, 1D) which are moved from the operating position thereof towards each other into a rest position to reduce the cross-section in order to allow ease of sliding-on of the tubular base member (11), the expansion elements (1A, 1B, 1C, 1D) having sealing jaws (2A, 2B, 2C, 2D) which, in the operating position thereof, form a closed circumferential outer contour (AK), which corresponds to an inner contour (IK) formed by an opening (8) in the die (M), there remaining between the inner contour (IK) and outer contour (AK) a narrow annular gap in order to apply a pressing force from the inner side to the overlap region (13) of the packaging components (11, 12), **characterised in that**
the expansion elements (1A, 1B, 1C, 1D) each being pivotably arranged on a common base element (5) and that,
each expansion element (1A, 1B, 1C, 1D) is secured to at least one torsion-resistant leaf spring element (4A, 4B, 4C, 4D) which enables precise pivoting of the respective expansion element (1A, 1B, 1C, 1D) between the rest position and operating position.

2. Device according to claim 1,
**characterised in that**
the leaf spring elements (4A, 4B, 4C, 4D) are arranged in a substantially vertical manner.

3. Device according to claim 1 or 2,
**characterised in that**
additional leaf spring elements (4') are arranged horizontally

4. Device according to claim 3,
**characterised in that**
an additional leaf spring element (4') is in each case arranged between two opposing expansion elements (1A, 1B or 1C, 1D).

5. Device according to any one of claims 1 to 4,
**characterised in that**
the leaf spring elements (4A, 4B, 4C, 4D) are secured in the lower portion of the expansion elements (1A, 1B, 1C, 1D).

6. Device according to any one of claims 1 to 5,
**characterised in that**
additional leaf spring elements (4") are secured in the upper portion of the expansion elements (1A, 1B, 1C, 1D) and are secured with the lower free ends thereof to a centring element (10).

7. Device according to claim 6,
**characterised in that**
the centring element (10) is retained only by means of the additional leaf spring elements (4").

8. Device according to any one of claims 1 to 7,
**characterised in that**
the leaf spring elements extend over the entire length of the expansion elements as far as the sealing jaws.

9. Device according to any one of claims 1 to 8,
**characterised in that**
the expansion elements (1A, 1B, 1C, 1D) are designed as magnet armatures (3A, 3B, 3C, 3D), at least in the region of the sealing jaws (2A, 2B, 2C, 2D) thereof.

10. Device according to any one of claims 1 to 9,
**characterised in that**
the die (M) is formed in an integral manner over the circumference of the opening (8) thereof.

11. Device according to any one of claims 1 to 10,
**characterised in that**
the die (M) has one or more magnet coil(s) (9).

12. Device according to any one of claims 1 to 11,
**characterised in that**
the die has elements for introducing the connection heat.

13. Device according to claim 12,
**characterised in that**
at least one ultrasound sonotrode is provided as elements for introducing the connection heat in the region of the die and **in that** the sealing jaws act as an anvil in this instance.

14. Device according to claim 12,
**characterised in that**
hot air openings are provided as elements for introducing the connection heat within the die and/or within the sealing jaws.

15. Method for the fluid-tight sealing of two partially overlapping packaging components (11, 12), one being a tubular base member (11), in particular formed from a blank of composite cardboard/plastics material, and an additional packaging component (12) forming the upper packaging portion or packaging base, using a device according to any one of claims 1 to 14,
**characterised by** the following steps:
- supplying an unfolded tubular base member,
- pushing the base member onto a mandrel which has expansion elements,
- supplying a die which has an opening,
- supplying an additional packaging component to the mandrel,
- introducing the connection heat,
- pressing the base member and additional packaging component against the die by unfolding the expansion elements in order to form a continuous outer contour in the contact region of the sealing jaws,
- connecting the base member and additional packaging component,
- folding-in the expansion elements,
- removing the die, and
- removing the unit comprising the base member and additional packaging component.

16. Method according to claim 15,
**characterised in that**
the supplying of the additional packaging component is carried out at the same time as the supplying of the die by the opening of the die being formed to secure the additional packaging component.

17. Method according to claim 15 or 16
**characterised in that**
the unfolding and folding-in of the expansion elements are carried out in precisely determined directions.

18. Method according to any one of claims 15 to 17,
**characterised in that**
the introduction of the connection heat is carried out by means of ultrasound.

19. Method according to any one of claims 15 to 17,
**characterised in that**
the introduction of the connection heat is carried out by means of hot air.

20. Method according to any one of claims 15 to 19,
**characterised in that**
the unfolding of the expansion elements is carried out magnetically and the folding-in is carried out by means of resilient force.

21. Method according to any one of claims 15 to 19,
**characterised in that**
the unfolding of the expansion elements is carried out with resilient force and the folding-in is carried out magnetically.

22. Method according to any one of claims 15 to 19,
**characterised in that**
the reversal of the folding movement is carried out by means of magnetic pole reversal.

## Revendications

1. Dispositif servant au scellement, de façon étanche aux liquides, de deux parties d'emballage (11, 12) se chevauchant partiellement, où l'une des parties d'emballage est un corps de base (11) de forme tubulaire, en particulier formé à partir d'une découpe d'un matériau composite constitué de carton / de matière plastique, et une autre partie d'emballage (12) forme la tête ou le fond d'emballage, ledit dispositif présentant au moins un mandrin (D) et une matrice (M), où le mandrin (D) présente au moins deux éléments d'écartement (1A, 1B, 1C, 1D) qui, à partir de leur position de travail, sont à déplacer l'un sur l'autre, pour obtenir, dans une position de repos, la diminution de la section, afin de permettre un léger coulissement du corps de base (11) de forme tubulaire, où les éléments d'écartement (1A, 1B, 1C, 1D) présentent des mâchoires de scellement (2A, 2B, 2C, 2D) qui forment, dans leur position de travail, un contour extérieur circulaire fermé (AK) qui correspond à un contour intérieur (IK) formé par une ouverture (8) située dans la matrice (M) où, entre le contour intérieur (IK) et le contour extérieur (AK), il subsiste un espace annulaire étroit servant à l'application d'une force de pression exercée, de l'intérieur, sur la zone de chevauchement (13) des parties d'emballage (11, 12),
**caractérisé**
**en ce que** les éléments d'écartement (1A, 1B, 1C, 1D) sont disposés à chaque fois de façon à pouvoir basculer sur un élément de socle (5) commun, et
**en ce que** chaque élément d'écartement (1A, 1B, 1C, 1D) est fixé sur au moins un élément de ressort à lames (4A, 4B, 4C, 4D) résistant à la torsion, élément de ressort à lames qui permet un basculement exact de l'élément d'écartement respectif (1A, 1B, 1C, 1D) entre la position de repos et la position de travail.

2. Dispositif selon la revendication 1,
**caractérisé**
**en ce que** les éléments de ressort à lames (4A, 4B, 4C, 4D) sont disposés essentiellement de façon verticale.

3. Dispositif selon la revendication 1 ou 2,
**caractérisé**
**en ce que** d'autres éléments de ressort à lames (4') sont disposés de façon horizontale.

4. Dispositif selon la revendication 3,
**caractérisé**
**en ce qu'**un autre élément de ressort à lames (4') est disposé à chaque fois entre deux éléments d'écartement (1A, 1B ou 1C, 1D) se faisant face respectivement l'un l'autre.

5. Dispositif selon l'une quelconque des revendications 1 à 4,
**caractérisé**
**en ce que** les éléments de ressort à lames (4A, 4B, 4C, 4D) sont fixés dans la partie inférieure des éléments d'écartement (1A, 1B, 1C, 1D).

6. Dispositif selon l'une quelconque des revendications 1 à 5,
**caractérisé**
**en ce que** des éléments de ressort à lames supplémentaires (4") sont fixés dans la partie supérieure des éléments d'écartement (1A, 1B, 1C, 1D) et sont fixés, par leurs extrémités libres inférieures, sur un élément de centrage (10).

7. Dispositif selon la revendication 6,
**caractérisé**
**en ce que** l'élément de centrage (10) est retenu seulement par les éléments de ressort à lames supplémentaires (4").

8. Dispositif selon l'une quelconque des revendications 1 à 7,
**caractérisé**
**en ce que** les éléments de ressort à lames s'étendent sur la totalité de la longueur des éléments d'écartement, jusqu'aux mâchoires de scellement.

9. Dispositif selon l'une quelconque des revendications 1 à 8,
**caractérisé**
**en ce que** les éléments d'écartement (1A, 1B, 1C, 1D) sont conçus, au moins dans la zone de leurs mâchoires de scellement (2A, 2B, 2C, 2D), comme des armatures d'aimant (3A, 3B, 3C, 3D).

10. Dispositif selon l'une quelconque des revendications 1 à 9,
**caractérisé**
**en ce que** la matrice (M) est réalisée en formant une seule et même pièce sur sa circonférence de l'ouverture (8).

11. Dispositif selon l'une quelconque des revendications 1 à 10,
**caractérisé**
**en ce que** la matrice (M) présente une ou plusieurs bobine(s) magnétique(s) (9).

12. Dispositif selon l'une quelconque des revendications 1 à 11,
**caractérisé**
**en ce que** la matrice présente des éléments servant à l'apport de la chaleur d'assemblage.

13. Dispositif selon la revendication 12,
**caractérisé**
**en ce qu'**il est prévu, comme éléments servant à l'apport de la chaleur d'assemblage, au moins une sonotrode soumise aux ultrasons et située dans la zone de la matrice, et **en ce que** les mâchoires de scellement servent alors d'enclume.

14. Dispositif selon la revendication 12,
**caractérisé**
**en ce qu'**il est prévu, comme éléments servant à l'apport de la chaleur d'assemblage, des ouvertures d'air chaud situées à l'intérieur de la matrice et/ou à l'intérieur des mâchoires de scellement.

15. Procédé servant au scellement, de façon étanche aux liquides, de deux parties d'emballage (11, 12) se chevauchant partiellement, où l'une des parties d'emballage est un corps de base (11) de forme tubulaire, en particulier formé à partir d'une découpe d'un matériau composite constitué de carton / de matière plastique, et une autre partie d'emballage (12) forme la tête ou le fond d'emballage, ledit procédé mis en oeuvre au moyen d'un dispositif selon l'une quelconque des revendications 1 à 14
étant **caractérisé par** les étapes suivantes :
- amenée d'un corps de base déplié, de forme tubulaire,
- coulissement du corps de base sur un mandrin présentant des éléments d'écartement,
- amenée d'une matrice présentant une ouverture,
- amenée d'une autre partie d'emballage sur le mandrin,
- apport de la chaleur d'assemblage,
- compression du corps de base et d'une autre partie d'emballage contre la matrice, en dépliant les éléments d'écartement dans le but de former un contour extérieur circulaire situé dans la zone de contact des mâchoires de scellement,
- assemblage du corps de base et d'une autre partie d'emballage,
- repliage des éléments d'écartement,
- enlèvement de la matrice et
- extraction de l'ensemble se composant du corps de base et d'une autre partie d'emballage.

16. Procédé selon la revendication 15,
**caractérisé**
**en ce que** l'amenée de l'autre partie d'emballage se produit en même temps que l'amenée de la matrice, tandis que l'ouverture de la matrice est conçue pour la fixation de l'autre partie d'emballage.

17. Procédé selon la revendication 15 ou 16,
**caractérisé**
**en ce que** le dépliage ou le repliage des éléments d'écartement se produit dans des directions fixées précisément.

18. Procédé selon l'une quelconque des revendications 15 à 17,
**caractérisé**
**en ce que** l'apport de la chaleur d'assemblage se produit par ultrasons.

19. Procédé selon l'une quelconque des revendications 15 à 17,
**caractérisé**
**en ce que** l'apport de la chaleur d'assemblage se produit au moyen d'air chaud.

20. Procédé selon l'une quelconque des revendications 15 à 19,
**caractérisé**
**en ce que** le dépliage des éléments d'écartement se produit magnétiquement et le repliage se produit sous l'effet de la force du ressort.

21. Procédé selon l'une quelconque des revendications 15 à 19,
**caractérisé**
**en ce que** le dépliage des éléments d'écartement se produit sous l'effet de la force du ressort et le repliage se produit magnétiquement.

22. Procédé selon l'une quelconque des revendications 15 à 19,
**caractérisé**
**en ce que** l'inversion du mouvement de pliage se produit par inversion des pôles magnétiques.
